# EUROPEAN PATENT SPECIFICATION

(11) **EP 1 350 967 B1**
(45) Date of publication and mention of the grant of the patent: **15.11.2006**
(21) Application number: 03006758.1
(22) Date of filing: 25.03.2003
(51) Int. Cl.: F16B 35/00, F16B 35/04, F16B 33/02, B21H 3/00

(54) **Male screw part**
Steckbarer Schraubeteil
Pièce mâle de vis

(30) Priority: 27.03.2002 JP 2002088507
(43) Date of publication of application: 08.10.2003
(73) Proprietor: AOYAMA SEISAKUSHO CO., LTD., Nagoya-shi, Aichi-ken (JP)
(72) Inventor: Mizuno, Hiromichi, Aoyama Seisakusho Co., Ltd., Ohguchi-cho, Niwa-gun, Aichi (JP); Kasagi, Yoshito, Aoyama Seisakusho Co., Ltd., Ohguchi-cho, Niwa-gun, Aichi (JP); Ogou, Michiaki, Aoyama Seisakusho Co., Ltd., Ohguchi-cho, Niwa-gun, Aichi (JP)
(74) Representative: Betten & Resch

(56) References cited:
- EP-A- 1 087 149
- GB-A- 435 304
- GB-A- 582 306

## Description

### Background of the Invention

The present invention relates to a male screw part, and more particularly, to a male screw part with at least one notch, which can be screwed into a mating female screw part while removing an attached material, such as coated film adhered to an inner surface of the female screw part.

In order to cut and remove an attached material, such as coated film or sputtered deposit produced by welding, on an inner surface of a nut simultaneously with screwing when a male screw part, such as bolts or tapping screws is to be screwed into a female screw part such as nuts, it has been proposed to form a notch or notches on screw threads of the screw part.

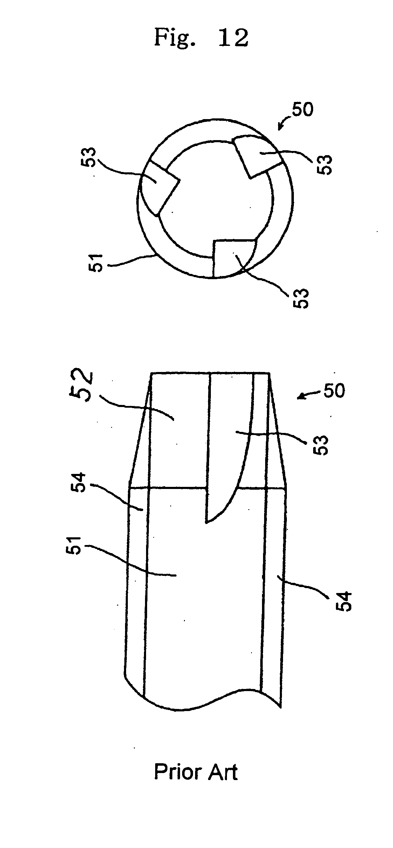

Conventionally, there has been generally known, for example, a method of forming at least one notch 53, for example three notches 53, by cutting on screw threads 54 extending from a shank portion 51 of a screw part 50 to a tapered screw guide portion 52 as shown in Fig. 12.

However, such method of forming the notch 53 by means of cutting needs two steps of forming screw threads 54 in thread rolling and forming the notch 53 by means of cutting, after forming a screw part stock in plastic working using a forming machine such as bolt formers. Therefore, there is caused a problem that an increase in processing steps leads to an increase in manufacturing cost. Further, there is also caused a problem that a material yield is low.

In addition, since the notch 53 is formed to be comparatively large in order to favorably discharge cut dust as shown in Fig. 12, there are reduced in shear area at the portion of screw threads 54 to cause a decreased shear strength. Therefore, the notch 53 is functioned only to cut and remove an attached material. A clamping force between a male screw and a female screw is born by the shank portion 51 without the notch 53 and a tip end of the shank portion 51 without notch 53 is used without screwing into the mating female screw. Accordingly, a region for use is restricted depending on a length of the tip end without screwing.

Meanwhile, another method of forming the above-described notch 53 on a screw part 50 comprises performing thread rolling after the notch 53 is formed when the screw part is subjecting to cold pressing. This method involves an advantage that there is no need of any cutting step for formation of the notch 53. However, there is caused a problem that the notch 53 is pressed by rolling pressure, and edge portions, which should make sharp cutting edges, are blunted to be decreased in sharpness, resulting in degrading of removability of an attached material.

A male screw part according to the preamble of claim 1 is known from EP-A-1 087 149.

### Summary of the Invention

An object of the present invention is to solve the problems of the prior art and to provide a male screw part formed with at least one notch, which is capable of effectively cutting and removing an attached material on an inner surface of a mating female screw part.

To solve these problems, the present invention provides a male screw part comprising a head and a shank portion extended from the head and formed with screw threads, and being adapted to be screwed into a mating female screw part, wherein the screw threads disposed in the vicinity of a tip end of the shank portion in a direction of screwing are formed with at least one notch in a heightwise direction thereof, the notch having edges intersecting with a ridgeline of the screw threads, and wherein a root diameter of the notch is larger than an inner diameter of the female screw part.

The present invention also provides a male screw part such that a constant-diameter columnar portion is provided contiguous to the tip end of the shank portion with a short tapered portion therebetween, the columnar portion being smaller in diameter than the shank portion and formed with screw threads having the same height and pitch as those of the screw threads on the shank portion, and wherein the notch is formed on the screw threads in the vicinity of the tip end of the shank portion.

Also, the present invention provides a male screw part wherein the notch is formed together with the screw threads nearly at a final stage of a rolling step of a screw part stock consisting of a head and a shank by a rolling die, wherein the rolling die having first ridges for forming the screw threads on a rolling surface and mountain-shaped second ridges for forming the notch, and wherein the second ridges intersecting with the first ridges in the vicinity of a terminal end of the rolling surface.

Further, it is preferable that the notch has a substantially V-shaped cross section in a heightwise direction of the screw threads, and a first angle relative to a normal line extending from a center of an axis of the shank portion on a first surface of the notch, is made smaller than a second angle relative to the normal line on a second surface of the notch.

### Brief Description of the Drawings

Fig. 1 shows a front view and a plan view of a male screw part according to the invention;
Fig. 2 is an enlarged, front view showing a tip end portion of the male screw part according to the invention;
Fig. 3 is a cross sectional view taken along the line A-A in Fig. 2;
Fig. 4 is an enlarged, side view showing an essential part of screw threads formed with three notches;
Fig. 5 is a cross sectional view showing a state, before the male screw part according to the invention is threaded into a female screw part;
Fig. 6 is an enlarged, cross sectional view showing an essential part in a state, in which the male screw part according to the invention is threaded into the female screw part;
Fig. 7 is a perspective view showing a set of rolling dies for thread rolling and forming notches;

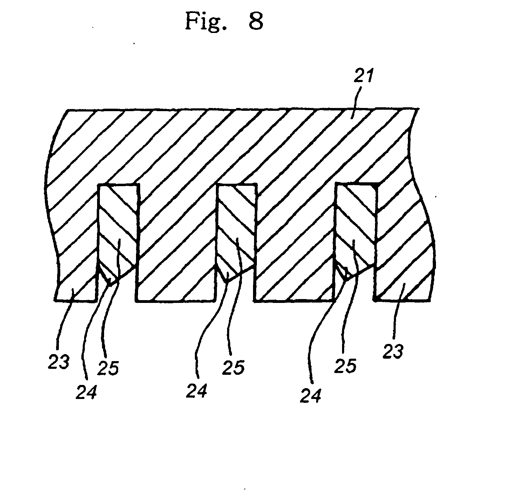

Fig. 8 is a cross sectional view showing nest pieces mounted on a stationary die;
Fig. 9 is a perspective view showing the thread rolling process;
Fig. 10 is a bar graph indicating amounts of coating peeled off for the male screw parts according to the invention and conventional male screw parts;
Fig. 11 is a graph indicating changes in torque, generated when the male screw parts according to the invention and conventional male screw parts are revolved in fastening;
Fig. 12 shows a front view and a plan view of a tip end portion of a conventional male screw part with notches.

### Detailed Description of Preferred Embodiments

A preferred embodiment of the invention will be described below with reference to the accompanying drawings.

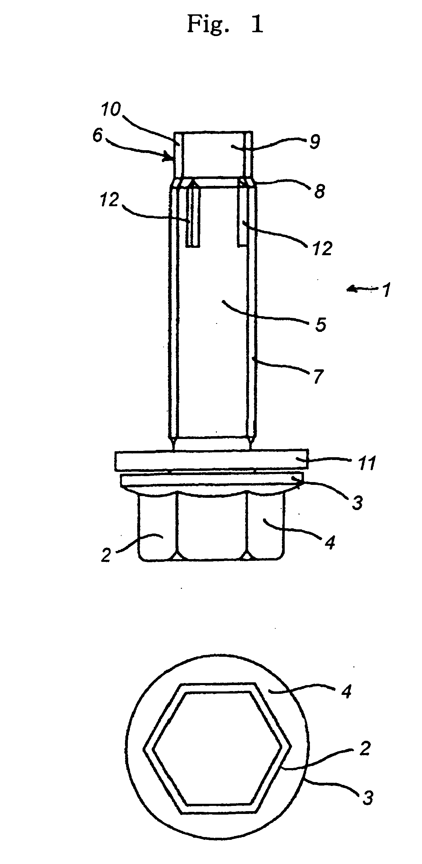

Figs. 1 to 4 and 13 to 15 show a male screw part according to the invention. The male screw part 1 comprises a head 4, which is composed of an engaging portion 2 to engage with a clamping tool at the time of fastening or disengagement, and a flange portion 3, a shank portion 5 provided contiguous to the head 4, and a screw guide portion 6 formed at a tip end of the shank portion 5.

A washer 11 is mounted below the head 4. Screw threads 7 are formed at a predetermined lead angle and a predetermined pitch on the shank portion 5. The screw guide portion 6 comprises a short tapered portion 8 contiguous to the shank portion 5 and a constant-diameter columnar portion 9 contiguous to the tapered portion 8. The constant-diameter columnar portion 9 is smaller in diameter than the shank portion 5, and formed thereon with guide screw threads 10, which have the same height and pitch as those of the screw threads 7 and are communicated to the screw threads 7.

The screw guide portion 6 functions as follows. In the case where the male screw part 1 is inserted obliquely into a female screw part (not shown), the constant-diameter columnar portion 9 of the screw guide portion 6 abuts against an inner surface of a female screw. At this time, since the guide screw threads 10 of the constant-diameter columnar portion 9 have the same height and pitch as those of the screw threads on the shank portion 5, they surely catch the screw threads of the female screw, thereby enabling correcting a position of the screw part. Accordingly, there is produced an advantage that insertion into a female screw can be smoothly and surely effected.

However, the screw guide portion 6 is not limited to a combination of the tapered portion 8 and the constant-diameter columnar portion 9 contiguous thereto. It can comprise a tapered portion, which is decreased gradually in diameter from the tip end of the shank portion 5. In addition, the screw guide portion 6 does not have to be formed.

Further, the male screw part 1 is not limited to the above in respect of a shape of the head 4 and presence or absence of the washer 11.

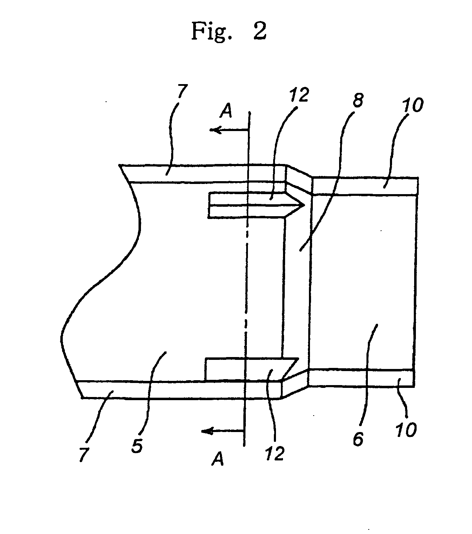

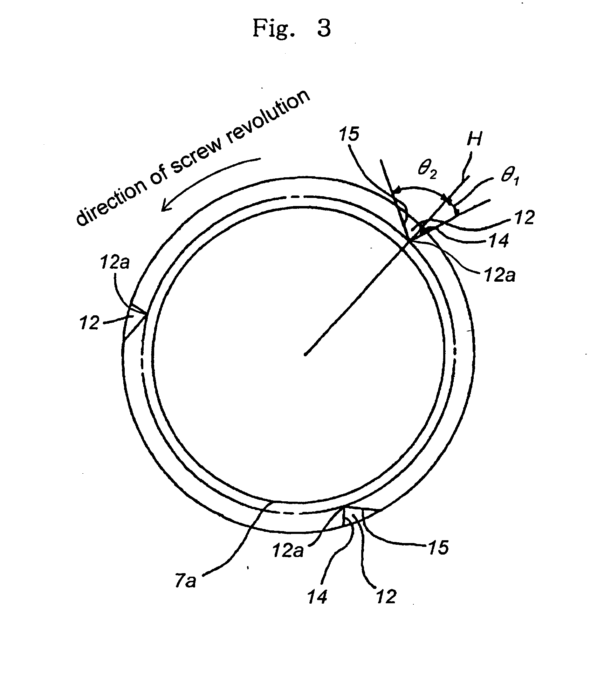

As shown in Figs. 2 to 4, at least one notch 12 is formed on the screw threads 7 disposed in the vicinity of the tip end of the shank portion 5 of the male screw part 1, that is, in the vicinity of a boundary between the shank portion 5 and the screw guide portion 6. The notch 12 has edges intersecting with a ridgeline of the screw threads 7 in a heightwise direction thereof to cut and remove an attached material, for example, coated film on the inner surface of the mating female screw. In the embodiment, three notches 12 extending in a circumferential direction of the shank portion 5 and having a V-shaped cross section are formed in three locations every pitch of a central angle of the shank portion 5 of 120° (Fig. 3).

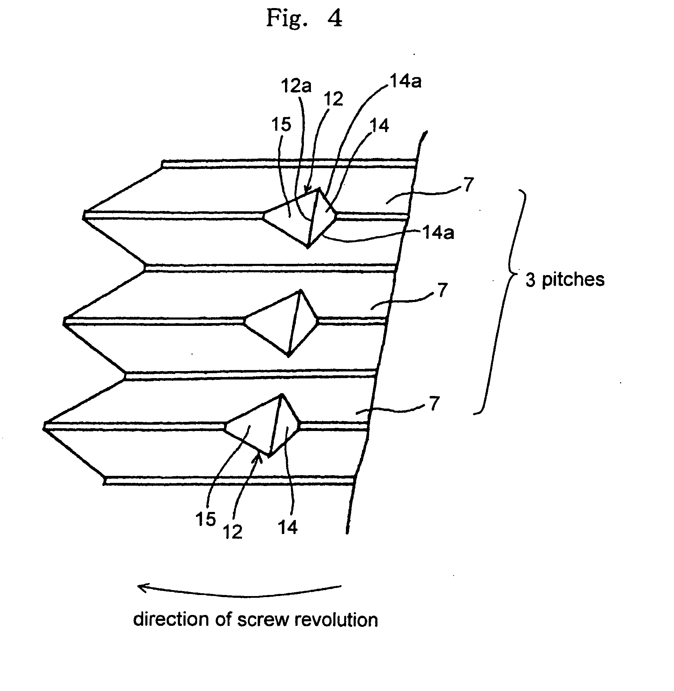

Fig. 4 is a side view showing the screw threads 7 having three notches 12 on the tip end portion of the shank portion 5. The number of the notches 12 on every pitch of the screw threads 7 suffices to be at least one, and is not specifically restrictive.

It suffices that at least one notch 12 be formed on the screw threads 7 at least on the tip end of the shank portion 5. In order to further improve the effect of removing an attached material on the inner surface of the female screw when the male screw part is screwed into the female screw, however, the plural notches 12 may be preferably formed, as shown in Fig. 4, over several pitches, for example, three pitches, extending axially from the screw thread 7 at the tip end of the shank portion 5.

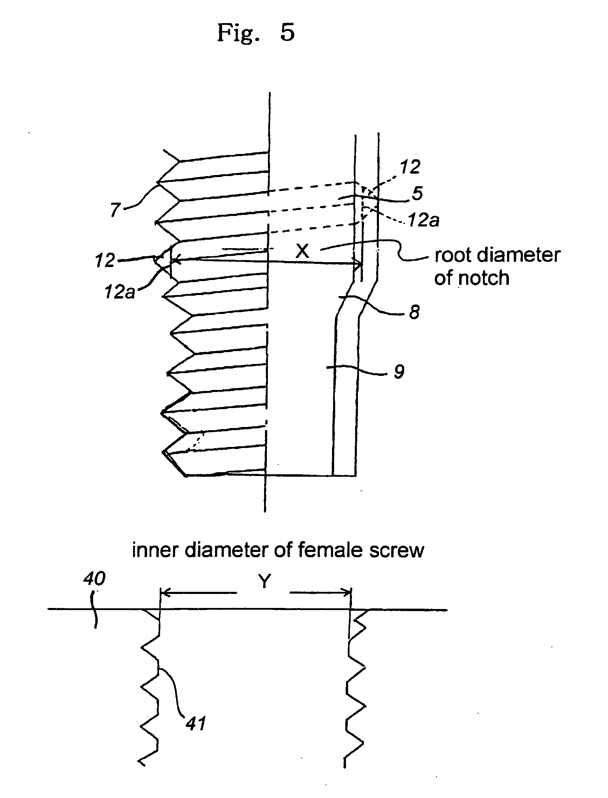

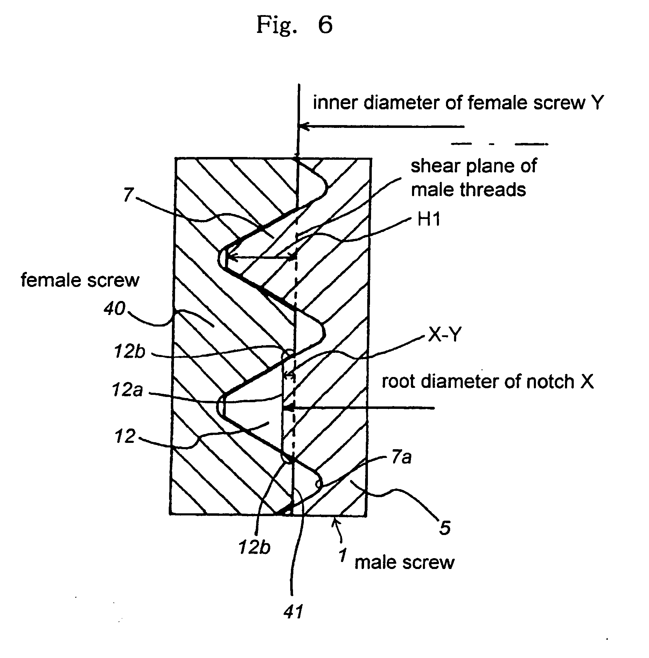

Figs. 5 and 6 show the relationship between a root diameter X of the notch 12 and an inner diameter Y of the female screw. Fig. 5 shows a state, before the shank portion 5 of the male screw part 1 according to the invention is screwed into a mating female screw part 40, while Fig. 6 shows a state, in which the both parts are screwed together. As shown in Fig. 6, it is preferable that the valley 12a of the notch 12 be formed to have a depth short of the valley 7a of the screw threads 7. In addition, it is required that the root diameter X of the notch 12 be larger than the inner diameter Y of the female screw part 40, that is, Y < X be established.

Thereby, it is possible to avoid reduction in shear strength, caused by reduction in shear area of the screw threads. This will be described with reference to Fig. 6. More specifically, in the case where the root diameter X of the notch 12 is equal to the inner diameter Y of the female screw part 40 (X = Y), the valley 12a of the notch 12 aligns linearly with tip end 41 of screw threads of the female screw part 40, a shear plane for the female screw part 40 is divided into sections by the valley 12a of the notch 12.

In contrast, since Y < X is established in the male screw part 1 of the invention, a shear plane 12b (corresponding to a distance (X - Y) of the screw threads 7 in a heightwise direction) is left toward an axis from the valley 12a of the notch 12. As a result, a shear plane of the screw threads 7 is not divided into sections by the notch 12, so that the screw threads 7 are by far increased in shear strength as compared with the case of X = Y. Accordingly, the screw threads 7 at that tip end of the shank portion 5, on which at least one notch 12 is formed, can posses an adequate clamping force on the female screw part 40.

In order to enhance the capability of removing an attached material on the inner surface of the female screw part, it is desired that edge portions of the notch 12 be lengthened and the heightwise distance (X - Y) of the screw threads 7 be as small as possible in order to prevent plugging of cut substances through an increase in a spatial volume in the notch 12. When (X - Y) is made to approach zero too far, however, shear strength is conversely hard to ensure for the screw threads 7. Therefore, it is desirable to determine the thread overlap between the male screw part 1 and the female screw part 40 (corresponding to (X-Y)) to be under 100% and equal to or more than 30% of the basic thread overlap H1 (according to JIS B 0101 1233).

The notch 12 is formed to have a substantially V-shaped cross section in a heightwise direction of the screw threads 7 of the male screw part 1 as shown in Fig. 3. The cross sectional shape of the notch 12 is not limited thereto but can be made various shapes such as U-shaped, rectangular, polygonal shapes, or the like.

As shown in Figs. 3 and 4, the notch 12 is composed of two valley flanks 14, 15 opposed to each other. An edge 14a of the valley flank 14 directed in a direction of rotation of the male screw part indicated by an arrow in the figure is made an edge, which functions as a cutting edge for cutting and removing an attached material on the inner surface of the female screw part. As shown in Fig. 3, where θ₁ denotes a first angle, which is the angle between the valley flank 14 and a normal line H extending from a center of axis of the shank portion 5 of the male screw part 1, and θ₂ denotes a second angle, which is the angle between the valley flank 15 and the normal line H, the first angle θ₁ is preferably smaller than the second angle θ₂. While θ₁ and θ₂ can be set to optional values, it is preferable to appropriately determine θ₁ in the range of 40° to 20° and θ₂ in the range of 80° to 60°.

It is preferable that the first angle θ₁ of the valley flank 14 be made small to form the edge 14a into a sharp configuration, and to remove an attached material, and the second angle θ₂ of the valley flank 15 be made comparatively large to ensure a spatial volume in the notch 12 and to prevent an excessive increase in fastening torque because of plugging removed substances in the notch 12.

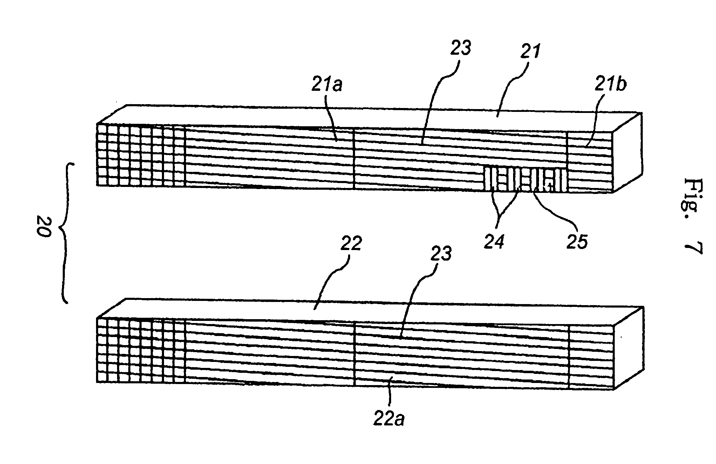

The notch 12 having such sharp edge can be formed, for example, in the following manner. A rolling process is applied, in which a set of rolling dies shown in Fig. 7 is used. The rolling dies 20 are flat dies composing of a stationary die 21 and a moving die 22.

A multiplicity of the first ridges 23 corresponding to the screw threads 7 are formed at a predetermined angle on a rolling surface 21a of the stationary die 21. Three nest pieces 25, on which the mountain-shaped second ridges 24 corresponding to the notches 12 shown in Fig. 3 are formed, are mounted in the vicinity of a terminal end 21b of the rolling surface 21a such that lengths of the mountain-shaped second ridges intersect with the first ridges 23 for formation of the screw threads 7. Also, only the first ridges 23 are formed on a rolling surface 22a of the moving die 22.

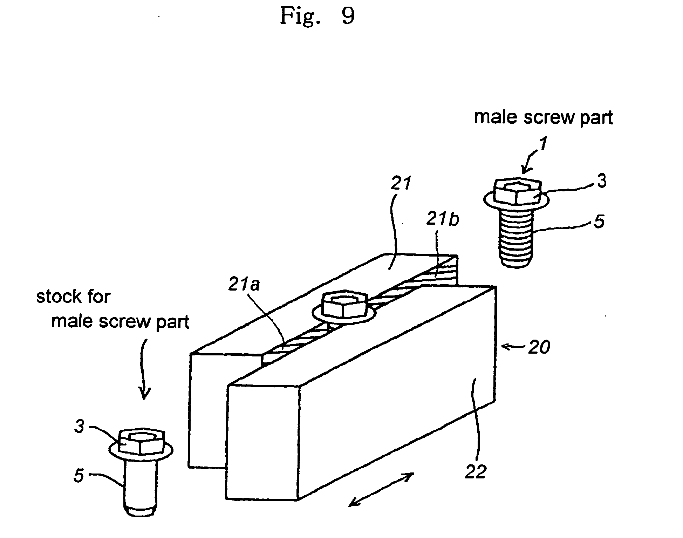

A stock 30 for a screw part is loaded between the stationary die 21, on which the nest pieces 25 are mounted, and the moving die 22 from ends of the dies as shown in Fig. 9. The stock 30 for a screw part is moved between the both dies, so that the shank portion 5 is thread rolled, at least one notch 12 is formed nearly at the end of the rolling step, and the male screw part 1 having been formed at the same time with the screw threads and the notch 12 is discharged from the other ends of the dies.

As described above, since the mountain-shaped second ridges 24 for formation of notch are formed in the vicinity of a terminal end 21b of the rolling surface 21a of the stationary die 21, the edges of the notch 12 are not blunted by the thread rolling, and so the resulted edges can function as sharp cutting edges.

In addition, while the embodiment has been described with respect to the case where flat dies are used as rolling dies, it is not limited thereto but can use rotary dies as rolling dies. Also, the mountain-shaped second ridges can be provided directly on a rolling surface of a stationary die without the use of the nest pieces 25.

An explanation will be given below to results of evaluation tests on the capability of the male screw part according to the invention.

### <Test 1>

The bolts with notches of the invention shown in Fig. 1 and the conventional bolts with notches shown in Fig. 12 were tested with respect to the coating removing capability thereof. The conventional bolts with notches were manufactured by forming notches at the time of cold pressing of threads and then performing thread rolling.

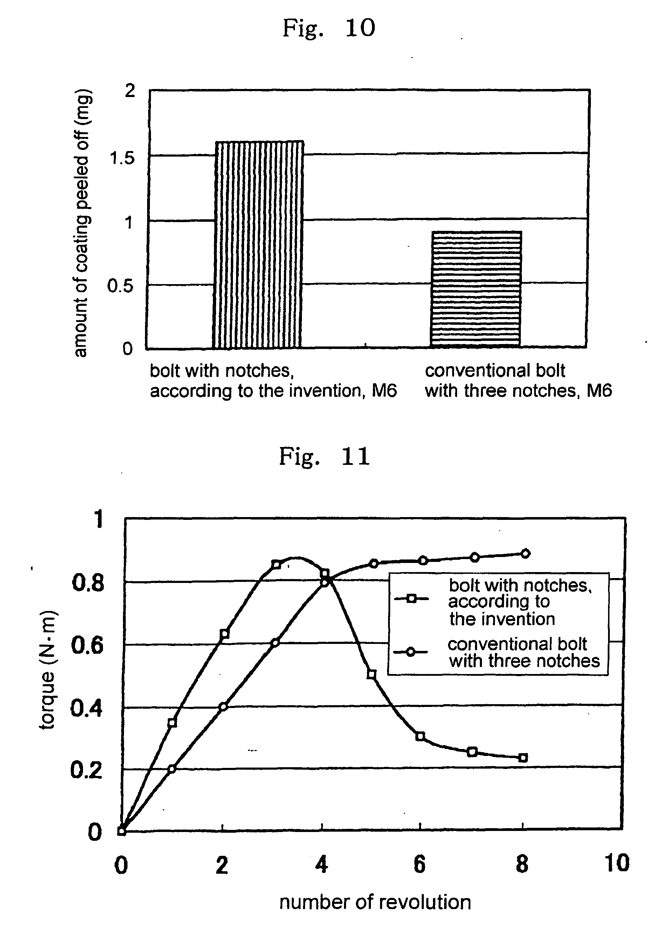

Fifteen bolts with notches according to the invention and fifteen conventional bolts with notches, respectively, were prepared. The respective bolts were screwed into coated nuts, and amounts of coating peeled off were measured from differences in weight before and after the screwing. Average values of amounts peeled off were measured for the respective bolt. The results are shown in Fig. 10.

As apparent from Fig. 10, the bolts with notches of the invention exhibit an excellent coating removing capability as approximately twice as that of the conventional bolts with notches. This is because the bolts with notches of the invention have sharp edges functioning as cutting edges but the conventional bolts with notches have blunt edges due to rolling pressure.

### <Test 2>

Tests were carried out on changes in torque when the two kinds of bolts used in the Test 1 were screwed into coated nuts. Fig. 11 shows changes in torque relative to the number of revolution at the time of screwing of the bolts with notches of the invention and the conventional bolts with notches. For the conventional bolts with notches, coating was not completely removed but left to enter between the nuts and screw threads of the bolts, so that torque was gradually increased with the revolution.

Meanwhile, for the bolts with notches of the invention, torque was rapidly increased at the initial stage of revolution and thereafter largely decreased. This is because coating was peeled off at the initial stage of starting of revolution to thereby cause a rapid increase in torque but coating was completely peeled off after the notches passed the coated portion and so torque was decreased.

From the above, it has been confirmed that the male screw part with notches of the invention is small in torque at the time of screwing to afford sure and smooth fastening.

As apparent from the above explanation, notches having sharp edges are formed on screw threads of the male screw part of the invention at the final stage of the thread rolling step simultaneously with formation of the screw threads, and the male screw part exhibits an excellent removing capability of an attached material when it is screwed into a mating female screw part such as coated nuts. Also, since torque is small at the time of screwing, the fastening work can be facilitated. Besides, since the root diameter of the notch is larger than the inner diameter of the female screw parts, reduction in shear area of screw threads is restricted enabling making sure screwing of the both parts. Accordingly, the male screw part according to the invention is high in productivity, excellent in removing capability of an attached material, and extremely great in industrial value since the screwing work can be carried out smoothly and surely.

## Claims

1. A male screw part comprising a head (2) and a shank (5) portion extended from the head and formed with screw threads (7), and being adapted to be screwed into a mating female screw part,
wherein the screw threads (7) disposed in the vicinity of a tip end of the shank portion in a direction of screwing are formed with at least one notch (12) in a heightwise direction thereof, the notch (12) having edges (14a) intersecting with a ridgeline of the screw threads (7), and
**characterized in that** a root diameter (X) of the notch (12) is larger than an inner diameter (Y) of the female screw part.

2. The male screw part according to claim 1,
wherein a constant-diameter columnar portion (9) is provided contiguous to the tip end of the shank portion (5) with a short tapered portion (8) therebetween, the columnar portion (9) being smaller in diameter than the shank portion (5) and formed with screw threads (10) having the same height and pitch as those of the screw threads (7) on the shank portion (5), and
wherein the notch (12) is formed on the screw threads (7) in the vicinity of the tip end of the shank portion.

3. The male screw part according to any one of claims 1 or 2,
wherein the notch (12) has a substantially V-shaped cross section in a heightwise direction of the screw threads (7), and a first angle (θ₁) relative to a normal line (H) extending from a center of an axis of the shank portion (5) on a first surface of the notch, is made smaller than a second angle (θ₂) relative to the normal line on a second surface of the notch.

## Patentansprüche

1. Außengewindeschraubenteil, das einen Kopf (2) und einen Schaftabschnitt (5), der sich von dem Kopf her erstreckt und mit Schraubengewindegängen (7) ausgebildet ist, umfasst und das geeignet ist, in ein passendes Innengewindeschraubenteil geschraubt zu werden,
wobei die Schraubengewindegänge (7), die in der Nähe eines äußersten Endes des Schaftabschnitts in einer Schraubrichtung angeordnet sind, in ihrer Höhenrichtung mit mindestens einer Kerbe (12) ausgebildet sind, wobei die Kerbe (12) Kanten (14a) aufweist, die sich mit einer Kammlinie der Schraubengewindegänge (7) schneiden, und
**dadurch gekennzeichnet, dass** ein Basisdurchmesser (X) der Kerbe (12) größer als ein Innendurchmesser (Y) des Innengewindeschraubenteils ist.

2. Außengewindeschraubenteil nach Anspruch 1,
bei dem ein säulenförmiger Abschnitt (9) mit konstantem Durchmesser vorgesehen ist, der mit dem äußersten Ende des Schaftabschnitts (5) zusammenhängt, mit einem kurzen verjüngten Abschnitt (8) dazwischen, wobei der säulenförmige Abschnitt (9) einen kleineren Durchmesser als der Schaftabschnitt (5) hat und mit Schraubengewindegängen (10) ausgebildet ist, die dieselbe Höhe und Steigung wie jene der Schraubengewindegänge (7) auf dem Schaftabschnitt (5) haben, und
bei dem die Kerbe (12) in der Nähe des äußersten Endes des Schaftabschnitts auf den Schraubengewindegängen (7) ausgebildet ist.

3. Außengewindeschraubenteil nach irgendeinem der Ansprüche 1 oder 2,
bei dem die Kerbe (12) in einer Höhenrichtung der Schraubengewindegänge (7) einen im wesentlichen V-förmigen Querschnitt hat und ein erster Winkel (θ₁) relativ zu einer Senkrechten (H), die sich von einem Zentrum einer Achse des Schaftabschnitts (5) her erstreckt, auf einer ersten Oberfläche der Kerbe kleiner gemacht ist als ein zweiter Winkel (θ₂) relativ zu der Senkrechten (H) auf einer zweiten Oberfläche der Kerbe.

## Revendications

1. Une pièce à filetage mâle, comprenant une tête (2) et une partie de tige (5), s'étendant depuis la tête et munie de filets de vis (7) et destiné à être vissée dans une partie à filetage femelle complémentaire,
dans laquelle les filets de vis (7), disposés à proximité d'une extrémité de bout de la partie de tige dans le sens du vissage, sont formés avec au moins une encoche (12) dans la direction de leur hauteur, l'encoche (12) ayant des bords (14a) coupant une ligne de nervure des filets de vis (7) et **caractérisée en ce qu'**un diamètre interne (X) de l'encoche (12) est supérieur à un diamètre intérieur (Y) de la partie à filetage femelle.

2. La partie de filetage mâle selon la revendication 1,
dans laquelle une partie en colonne (9) à diamètre constant est prévue, contiguë à l'extrémité de bout de la partie (5), avec une partie courte (8) effilée, intermédiaire, la partie en colonne (9) étant de plus petit diamètre que la partie de tige (5) et étant munie de filets de vis (10) ayant la même hauteur et le même pas que ceux des filets de vis (7) situés sur la partie de tige (5), et dans laquelle l'encoche (12) est formée sur les filets de vis (7), à proximité de bout de la partie de tige.

3. La partie de filetage mâle selon l'une quelconque des revendications 1 ou 2,
dans laquelle l'encoche (12) a une section transversale sensiblement en forme de V, observée dans la direction de la hauteur des filets de vis (7), et un premier angle (θ₁) entre une ligne (H) normale, s'étendant depuis un centre d'un axe de la partie de tige (5) et une première surface de l'encoche, est inférieur à un deuxième angle (θ₂) entre la ligne normale et une deuxième surface de l'encoche.
